# EUROPEAN PATENT SPECIFICATION

(11) **EP 1 926 006 B1**
(45) Date of publication and mention of the grant of the patent: **12.06.2013**
(21) Application number: 07012756.8
(22) Date of filing: 29.06.2007
(51) Int. Cl.: G05D 1/02

(54) **Charging method of robot cleaner**
Ladeverfahren für einen Reinigungsroboter
Procédé de chargement pour robot nettoyeur

(30) Priority: 22.11.2006 KR 20060115649
(43) Date of publication of application: 28.05.2008
(60) Divisional application: 13162340.7
(73) Proprietor: Samsung Electronics Co., Ltd., Suwon-si, Gyeonggi-do, 443-742 (KR)
(72) Inventor: Lee, Ju-sang, Gwangsan-gu Gwangju-city (KR); Jeung, Sam-jong, Gwangju-city (KR); Song, Jeong-gon, Gwangju-city (KR); Kim, Myeong-ho, Gwangju-city (KR); Ko, Jang-youn, Gwangju-city (KR); Kim, Kyoung-woung, Gwangju-city (KR); Lee, Hak-bong, Gwangju-city (KR)
(74) Representative: Käck, Jürgen

(56) References cited:
- EP-A- 1 430 826
- GB-A- 2 407 651
- KR-B1- 100 645 381
- US-A1- 2005 010 330

## Description

### FIELD OF THE INVENTION

The present invention relates generally to a robot cleaner. More particularly, the present invention relates to a robot cleaner capable of cleaning a surface to be cleaned while traveling by itself.

### BACKGROUND OF THE INVENTION

Generally, a robot cleaner takes in foreign substance, such as dust, dirt, or the like, from a surface to be cleaned while traveling around by itself without user's manipulation within a cleaning area, and thus automatically cleans the cleaning area.

Such a robot cleaner has a distance sensor or a photographing unit, so that it cleans the cleaning area while confirming whether there is an obstacle located in front thereof or confirming a distance therefrom to a device or a stationery object, such as a wall or the like installed in the cleaning area and thus moving to avoid a collision with them.

The robot cleaner as described above is provided with a left driving wheel, a right driving wheel, and a driven wheel, which are installed on a bottom of a cleaner body. The wheels are connected to and driven by driving motors, respectively. The driving motors are driven under control of a control unit, so that the cleaner body can change a traveling direction thereof.

In addition, in the bottom of the cleaner body is formed a dust inlet, which takes in the foreign substance, such as the dust, the dirt, or the like, from the surface to be cleaned. A suction force, which is applied to the dust inlet, is provided by a suction motor installed in the cleaner body. The dust inlet is connected to a dust collecting chamber formed in the cleaner body. Accordingly, the foreign substance contained in taken-in air is collected into and then removed from the dust collecting chamber.

Also, the robot cleaner cleans the cleaning area while traveling around along a working path programmed beforehand or sensing a traveling pattern formed on the surface to be cleaned to travel along the sensed traveling pattern. When the robot cleaner carries out the cleaning operation while traveling around by itself as described above, the control unit checks the amount of electric charge remained in a battery and confirms whether the checked amount of electric charge is sufficient. And if it is determined that the battery should be charged, the robot cleaner communicates with a charging apparatus located at a predetermined position by radio to search the position of the charging apparatus, and moves to the searched position. Namely, for example, the control unit searches the position of the charging apparatus while transmitting and receiving signals to and from the charging apparatus, and drives the driving motors to move the cleaner body toward the charging apparatus. Connecting terminals formed on the robot cleaner are connected to charging terminals formed on the charging apparatus. When the connecting terminals and the charging terminals are connected with each other as described above, the control unit carries out a charging mode until the battery is fully charged with electricity. At this time, the robot cleaner stands by while stopping other modes, such as a cleaning mode, a wheel driving mode and the like.

For example, KR 100 645 381 B1 discloses a system and a method for returning a robot cleaner to a charger. More particularly, the method described in this document provides automatic charging wherein a robot cleaner returns to and is connected to a charger automatically.

Furthermore, GB 2 407 651 A relates to a robot system comprising a robot cleaner with a rechargeable battery and an external recharging apparatus. It is disclosed that a robot cleaner system is capable of detecting and docking with an external recharging apparatus which is disposed at an area undetectable by a camera.

In addition to the case that the robot cleaner searches the charging apparatus by itself and is automatically charged with electricity as described above, a user can directly move the robot cleaner to the charging apparatus and manually connect the connecting terminals to the charging terminals to charge the robot cleaner with electricity.

However, when the robot cleaner is manually charged as described above, it may be maintained for a long time in a state where it is not charged with electricity if the user does not confirm that the connecting terminals and the charging terminals are accurately connected with each other after docking the robot cleaner to the charging apparatus. In this case, a problem occurs, in that the battery of the robot cleaner is discharged and thereby the robot cleaner can not be used at a desired time.

### SUMMARY OF THE INVENTION

The invention is defined in claims 1 and 6 respectively. Particular embodiments of the invention are set out in the dependent claims.

An aspect of the present invention is to solve at least the above problems and/or disadvantages and to provide at least the advantages described below. Accordingly, an aspect of the present invention is to provide a charging method of a robot cleaner capable of sensing a bad connection between connecting terminals and charging terminals and thus normally charging the robot cleaner with electricity when the robot cleaner is manually charged.

According to an aspect of an exemplary embodiment of the present invention, a charging method of a robot cleaner includes sensing a connected state between charging terminals of a charging apparatus and connecting terminals of the robot cleaner, confirming whether the robot cleaner is positioned in a predetermined range from the charging apparatus when the charging terminals and the connecting terminals are separated from each other, and carrying out an automatic charging mode where the robot cleaner automatically moves and docks with the charging apparatus thus to be charged with electricity when the robot cleaner is positioned in the predetermined range.

Here, preferably, but not necessarily, the confirming includes detecting a short distance signal transmitted from the charging apparatus, and confirming whether the robot cleaner is positioned in front of the charging apparatus when the short distance signal is detected.

Preferably, but not necessarily, the confirming whether the robot cleaner is positioned in front of the charging apparatus includes confirming whether the robot cleaner is positioned in front of the charging apparatus by using a front sensor disposed in the robot cleaner.

Preferably, but not necessarily, the front sensor includes a distance sensor disposed in the robot cleaner.

Preferably, but not necessarily, the front sensor includes a camera disposed in the robot cleaner.

Also, preferably, but not necessarily, the confirming is carried out after a lapse of predetermined time after confirming that the charging terminals and the connecting terminals are separated from each other.

### BRIEF DESCRIPTION OF THE DRAWING FIGURES

The above aspect and other features of the present invention will become more apparent by describing in detail an exemplary embodiment thereof with reference to the accompanying drawings, wherein;

FIG. 1 is a perspective view exemplifying a robot cleaner to which a charging method according to an exemplary embodiment of the present invention is applied;

FIG. 2 is block diagram exemplifying a charging apparatus and the robot cleaner illustrated in FIG. 1;

FIG. 3 is a side elevation view exemplifying a charging state of the robot cleaner illustrated in FIG. 1 where it is docked to the charging apparatus; and

FIG. 4 is a flow chart exemplifying the charging method of the robot cleaner according to the exemplary embodiment of the present invention.

Throughout the drawings, the same drawing reference numerals will be understood to refer to the same elements, features, and structures.

### DETAILED DESCRIPTION OF THE EXEMPLARY EMBODIMENTS

Hereinafter, a charging method of a robot cleaner according to an exemplary embodiment of the present invention will be described in detail with reference to the accompanying drawings.

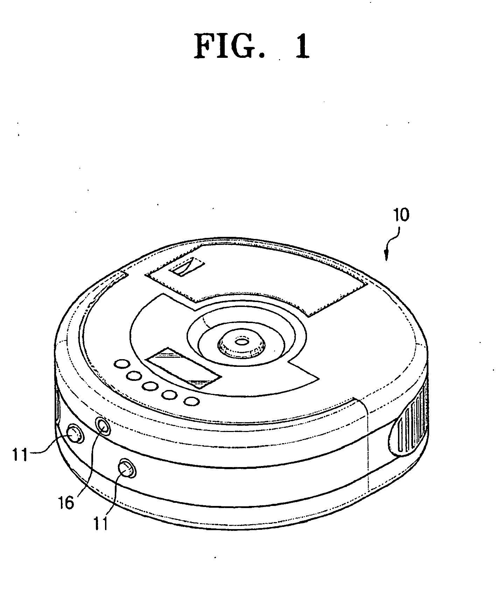

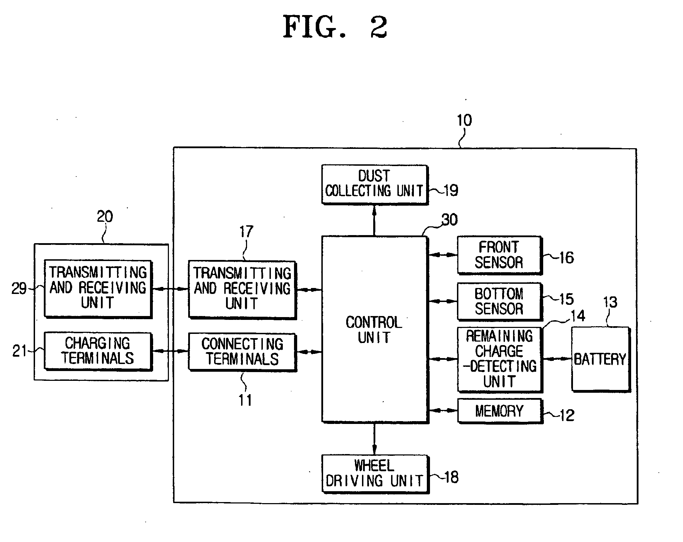

First, a robot cleaner 10 and a charging apparatus 20 are explained as follows with reference to FIGS. 1 and 2.

The robot cleaner 10 is provided with connecting terminals 11, which correspond to charging terminals 21 of the charging apparatus 20. The connecting terminals 11 are formed, so that a pair of connecting terminals is exposed to the outside. When the connecting terminals 11 are connected to the charging terminals 21, a battery 13 of the robot cleaner 10 can be charged with electricity.

Also, the robot cleaner 10 is provided with a memory 12, the battery 13, a remaining charge detecting unit 14, a bottom sensor 15, a front sensor 16, a transmitting and receiving unit 17, a wheel driving unit 18, a dust collecting unit 19 and a control unit 30.

The memory 12 stores various data, for example, a cleaning time, a cleaning area, a cleaning pattern, etc., which are required when the control unit 30 automatically controls the robot cleaner 10.

The battery 13, which supplies an electric power for driving, is charged with a certain amount of electric charge. The remaining charge detecting unit 14 detects the amount of electric charge remaining in the battery 13 on occasion, and transmits the detected amount of electric charge to the control unit 30. The control unit 30 confirms the amount of electric charge transmitted from the remaining charge detecting unit 14 on occasion, determines whether the battery 13 should be charged, and then carries out a predetermined automatic charging mode or informs a user about a necessary charging process or a charge-requiring point in time, so that she or he can manually charge the robot cleaner 10 with electricity. Namely, the control unit 30 can provide the amount of electric charge remaining in the battery 13 or the information on the charging or the charge-requiring point in time to the user through a separate display unit (not illustrated), an acoustic signal, or a user's communication device, which is connected with the transmitting and receiving unit 17 through a network communication.

Accordingly, the user can manually move the robot cleaner 10 to the charging apparatus 20 and dock the connecting terminals 11 to the charging terminals 21 thus to charge the robot cleaner 10 with electricity. Of course, the robot cleaner 10 can automatically charge the battery 13 with electricity through the automatic charging mode.

The bottom sensor 15 is installed on a bottom of the robot cleaner 10 to face a surface to be cleaned. The bottom sensor 15 measures a distance from the surface to be cleaned. Also, the bottom sensor 15 detects certain marks formed on the surface to be cleaned. Accordingly, the bottom sensor 15 is used to confirm a cleaning area or a traveling path. As the bottom sensor 15, a light emitting and receiving sensor can be used.

The front sensor 16 is installed on a side of the robot cleaner 10, more preferably, on the front of the robot cleaner 10 on which the connecting terminals 11 are disposed. The front sensor 16 is used to detect an obstacle or wall located in a traveling direction or in front of the robot cleaner 10 and a distance from the obstacle or wall. Accordingly, the front sensor 16 can be made up of a distance sensor including a light emitting and receiving sensor, or configured to include a camera, which photographs a forward area.

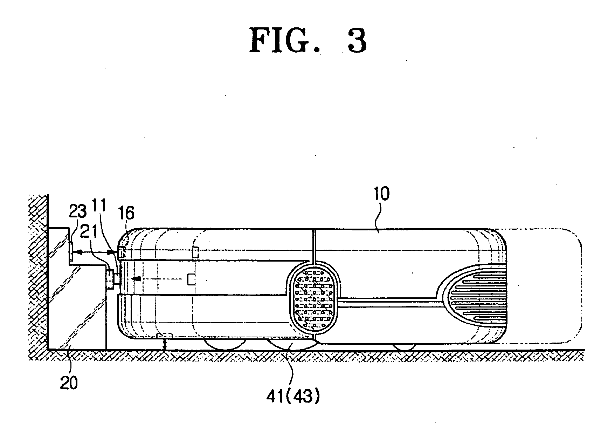

Namely, as illustrated in FIG. 3, the front sensor 16 can be used to detect a certain identifying part 23 installed on the charging apparatus 20 to measure a distance between the identifying part 23 and the robot cleaner 10.

Signals outputted from the sensors 15 and 16 are transmitted to the control unit 30. The control unit 30 obtains information on a state, a position and the like of the robot cleaner 10 on the basis of the transmitted signals, and controls the robot cleaner 10 by using the obtained information.

For example, through the signals outputted from the sensors 15 and 16, the control unit 30 can sense whether the robot cleaner 10 is positioned in front of the charging apparatus 20 to face it, or whether the rear of the robot cleaner 10 is positioned to face the charging apparatus 20.

The dust collecting unit 19 provides a suction force for cleaning the surface to be cleaned in the cleaning area. The dust collecting unit 19 can include a dust collecting motor.

The transmitting and receiving unit 17 is used to search a charging position through a communication with a transmitting and receiving unit 29 installed in the charging apparatus 20. In addition, the transmitting and receiving unit 17 functions to transmit and receive signals to and from a remote controller, which is operated by the user. Accordingly, the robot cleaner 10 can be remotely controlled.

Also, the transmitting and receiving unit 17 receives short and long distance signals transmitted from the transmitting and receiving unit 29 of the charging apparatus 20. The control unit 30 can determine a distance between the charging apparatus 20 and the robot cleaner 10 on the basis of the signals received by the transmitting and receiving unit 17.

As illustrated in FIG. 3, the wheel driving unit 18, which selectively drives left and right driving wheels 41 and 43 installed on the bottom of the robot cleaner 10, is driven under control of the control unit 30. The wheel driving unit 18 can be made up of stepping motors connected to the left and right driving wheels 41 and 43, respectively.

Hereinafter, a charging method according to an exemplary embodiment of the present invention to which the robot cleaner 10 constructed as described above is applied will be described in detail with reference to FIGS. 2, 3 and 4.

The charging method of the robot cleaner 10 according to the exemplary embodiment of the present invention is a method, which when the user manually docks the robot cleaner 10 to the charging apparatus 20 without using the automatic charging function, allows the robot cleaner 10 to be normally charged with electricity, even though the connecting terminals 11 and the charging terminals 21 are not connected with each other by the lack of user's perception.

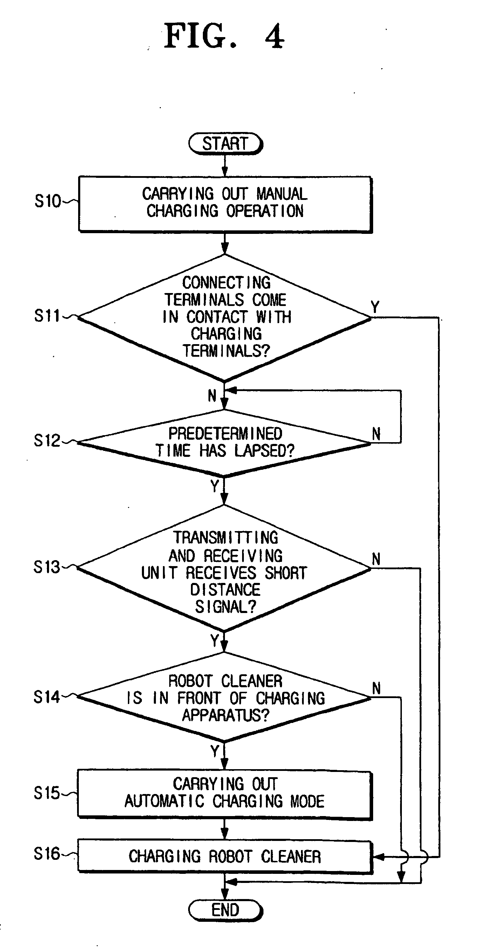

First, as illustrated in FIG. 4, the user carries out a manual charging operation (S10).

In the manual charging operation, the user moves the robot cleaner 10 close to the charging apparatus 10, so that the connecting terminals 11 and the charging terminals 21 come in contact with each other.

After the manual charging operation is carried out as described above, the control unit 30 confirms whether the connecting terminals 11 and the charging terminals 21 come in contact with each other (S 11). As a result of the confirmation, if it is confirmed that the terminals 11 and 21 are not connected with each other, the control unit 30 determines whether a predetermined time has lapsed from a time when it is confirmed that the terminals 11 and 21 are not connected with each other (S12). Meanwhile, the user can sense the fact that the terminals 11 and 21 are not connected with each other at once or in a certain time. If the user confirms the disconnection between the terminals 11 and 21, she or he can move the robot cleaner 10 again, so that the terminals 11 and 21 are in contact with each other.

If it is determined that the terminals 11 and 21 are still not connected with each other even though the predetermined time has lapsed at the step S12, the control unit 30 confirms whether the transmitting and receiving unit 17 receives a short distance signal from the charging apparatus 20 (S 13). Namely, if the transmitting and receiving unit 17 receives the short distance signal, the control unit 30 can sense that the robot cleaner 10 is positioned in a short distance, that is, in a predetermined range, from the charging apparatus 20.

If it is confirmed that the transmitting and receiving unit 17 receives the short distance signal, the control unit 30 confirms whether the robot cleaner 10 is positioned to face the front of the charging apparatus 20, by using the front sensor 16 (S 14). Namely, the front sensor 16 detects the identifying part 23 of the charging apparatus 20, and the control unit 30, which receives the detected signal from the front sensor 16, can confirm a distance between the charging apparatus 20 and the robot cleaner 10, a posture of the robot cleaner 10, etc.

And if it is confirmed that the robot cleaner 10 is positioned just in front of the charging apparatus 20 at the step S 14, the control unit 30 determines that although the user carries out the manual charging operation, the terminals 11 and 21 do not come in contact with each other, and carries out an automatic charging mode (S 15). At the step S15, the control unit 30 confirms an accurate position of the robot cleaner 10 by using the bottom sensor 15 as well as the front sensor 16. And then, the control unit 30 controls the wheel driving unit 18, so that the robot cleaner 10 moves toward and docks to the charging apparatus 20. When the robot cleaner 10 is docked to the charging apparatus 20 as described above, that is, when the connecting terminals 11 and the charging terminals 21 are in contact with each other, the control unit 30 begins to charges the robot cleaner 10 with electricity (S16). Namely, the control unit 30 carries out the automatic charging mode to automatically charge the battery 13 with electricity.

As apparent from the foregoing description, according to the exemplary embodiment of the present invention, the charging method of the robot cleaner allows the robot cleaner to determine by itself that when the user manually connects the connecting terminals to the charging terminals without using the automatic charging function, the manual charging operation is not normally carried out if the terminals are not connected with each other by the lack of user's perception, and according to the determined result, allows the robot cleaner to drive by itself, so that it carries out the automatic charging mode.

Accordingly, the charging method of the robot cleaner according to the exemplary embodiment of the present invention can prevent the robot cleaner from being maintaining for a certain time in a state where the connecting terminals thereof do not come in contact with the charging terminals in front of the charging apparatus thus to discharge the battery and to cause the robot cleaner not to carry out the operation thereof.

## Claims

1. A charging method of a robot cleaner moved by a user to a location close to a charging apparatus (20) for manual charging, the method comprising:
sensing (S11) a connected state between charging terminals (21) of the charging apparatus (20) and connecting terminals (11) of the robot cleaner (10) at the location close to the charging apparatus (20);
determining (S13; S14) whether the robot cleaner (10) at the location close to the charging apparatus (20) is positioned in a predetermined range from the charging apparatus (20) when the charging terminals (21) and the connecting terminals (11) are separated from each other; and
automatically moving and docking the robot cleaner (10) with the charging apparatus (20) so as to be charged (S16) with electricity supplied by the charging apparatus, in response to the robot cleaner being moved to the location close to the charging apparatus (20), when it is determined that the robot cleaner (10) at the location close to the charging apparatus (20) is positioned in the predetermined range from the charging apparatus (20) and it is sensed that the charging terminals (21) of the charging apparatus and the connecting terminals (11) of the robot cleaner at the location close to the charging apparatus (20) are separated from each other,
wherein the step of determining whether the robot cleaner is positioned in the predetermined range comprises detecting a short distance signal transmitted from the charging apparatus (20), and determining (S14) whether the robot cleaner (10) is positioned in front of the charging apparatus (20) when the short distance signal is detected.

2. The method of claim 1, wherein the step of determining (S13, S14) is carried out after a lapse of predetermined time after having sensed (S11) that the charging terminals (21) and the connecting terminals (11) are separated from each other.

3. The method of claim 1, wherein the step of determining (S14) whether the robot cleaner (10) is positioned in front of the charging apparatus (20) comprises determining whether the robot cleaner (10) is positioned in front of the charging apparatus (20) by using a front sensor (16) disposed in the robot cleaner (10).

4. The method of claim 3, wherein the front sensor (16) comprises a distance sensor disposed in the robot cleaner (10).

5. The method of claim 3, wherein the front sensor (16) comprises a camera disposed in the robot cleaner (10).

6. A robot cleaner system comprising:
a robot cleaner (10) comprising
a battery (13);
a pair of connecting terminals (11) to charge the battery (13); and
a control unit (30); and
a charging apparatus (20) comprising charging terminals (21);
**characterized in**
**that** the control unit (30) is adapted to determine whether the robot cleaner (10) is positioned in a predetermined range from the charging apparatus (20) and to determine whether the charging terminals of the charging apparatus (20) and the connecting terminals (11) of the robot cleaner (10) are separated from each other,
wherein the control unit (30) is adapted to control the robot cleaner (10) to automatically move and dock with the charging apparatus (20) so as to be charged with electricity supplied by the charging apparatus in response to the robot cleaner being moved by a user to a location close to the charging apparatus (20) for manual charging when it is determined that the robot cleaner (10) at the location close to the charging apparatus (20) is positioned in the predetermined range from the charging apparatus (20) and it is determined that the charging terminals (21) of the charging apparatus and the connecting terminals (11) of the robot cleaner at the location close to the charging apparatus (20) are separated from each other,
wherein the control unit (30) is adapted to determine whether the robot cleaner (10) is positioned in the predetermined range by using a short distance signal transmitted from the charging apparatus and to determine whether the robot cleaner (10) is positioned in front of the charging apparatus (20) when the short distance signal is detected.

7. The robot cleaner system of claim 6, wherein the robot cleaner (10) further comprises a front sensor (16), wherein the control unit (30) is adapted to determine whether the robot cleaner (10) is positioned in front of the charging apparatus (20) based on a signal from the front sensor (16).

8. The robot cleaner system of claim 7, wherein the front sensor (16) comprises a distance sensor disposed in the robot cleaner (10).

## Patentansprüche

1. Ladeverfahren eines Reinigungsroboters, der von einem Benutzer zu einem Ort nahe einer Ladevorrichtung (20) zum manuellen Aufladen bewegt wird, wobei das Verfahren umfasst:
Erfassen (S11) eines verbundenen Zustandes zwischen Ladeanschlüssen (21) der Ladevorrichtung (20) und Verbindungsanschlüssen (11) des Reinigungsroboters (10) an dem Ort nahe der Ladevorrichtung (20);
Feststellen (S13; S14), ob der Reinigungsroboter (10) an dem Ort nahe der Ladevorrichtung (20) in einer vorbestimmten Reichweite von der Ladevorrichtung (20) angeordnet ist, wenn die Ladeanschlüsse (21) und die Verbindungsanschlüsse (11) voneinander getrennt sind; und
automatisches Bewegen und Ankoppeln des Reinigungsroboters (10) an die Ladevorrichtung (20), so dass er mit Strom aufgeladen wird (S16), der durch die Ladevorrichtung zugeführt wird, in Reaktion darauf, dass der Reinigungsroboter zu dem Ort nahe der Ladevorrichtung (20) bewegt wird, wenn festgestellt wird, dass der Reinigungsroboter (10) an dem Ort nahe der Ladevorrichtung (20) in der vorbestimmten Reichweite von der Ladevorrichtung (20) angeordnet ist, und erfasst wird, dass die Ladeanschlüsse (21) der Ladevorrichtung und die Verbindungsanschlüsse (11) des Reinigungsroboters an dem Ort nahe der Ladevorrichtung (20) voneinander getrennt sind,
wobei der Schritt des Feststellens, ob der Reinigungsroboter in der vorbestimmten Reichweite angeordnet ist, das Erfassen eines Kurzstreckensignals, das von der Ladevorrichtung (20) übertragen wird, und das Feststellen (S14), ob der Reinigungsroboter (10) vor der Ladevorrichtung (20) angeordnet ist, wenn das Kurzstreckensignal erfasst wird, umfasst.

2. Verfahren nach Anspruch 1, wobei der Schritt des Feststellens (S13, S14) nach einem Ablauf einer vorbestimmten Zeit ausgeführt wird, nachdem erfasst wurde (S11), dass die Ladeanschlüsse (21) und die Verbindungsanschlüsse (11) voneinander getrennt sind.

3. Verfahren nach Anspruch 1, wobei der Schritt des Feststellens (S14), ob der Reinigungsroboter (10) vor der Ladevorrichtung (20) angeordnet ist, das Feststellen, ob der Reinigungsroboter (10) vor der Ladevorrichtung (20) angeordnet ist, unter Verwendung eines vorderen Sensors (16), der im Reinigungsroboter (10) angeordnet ist, umfasst.

4. Verfahren nach Anspruch 3, wobei der vordere Sensor (16) einen Abstandssensor aufweist, der im Reinigungsroboter (10) angeordnet ist.

5. Verfahren nach Anspruch 3, wobei der vordere Sensor (16) eine Kamera aufweist, die im Reinigungsroboter (10) angeordnet ist.

6. Reinigungsrobotersystem, das aufweist:
einen Reinigungsroboter (10) mit
einer Batterie (13);
einem Paar von Verbindungsanschlüssen (11) zum Aufladen der Batterie (13); und
einer Steuereinheit (30); und
eine Ladevorrichtung (20) mit Ladeanschlüssen (21);
**dadurch gekennzeichnet, dass**
die Steuereinheit (30) dazu ausgelegt ist, festzustellen, ob der Reinigungsroboter (10) in einer vorbestimmten Reichweite von der Ladevorrichtung (20) angeordnet ist, und festzustellen, ob die Ladeanschlüsse der Ladevorrichtung (20) und die Verbindungsanschlüsse (11) des Reinigungsroboters (10) voneinander getrennt sind,
wobei die Steuereinheit (30) dazu ausgelegt ist, den Reinigungsroboter (10) so zu steuern, dass er sich automatisch bewegt und an die Ladevorrichtung (20) ankoppelt, so dass er mit Strom aufgeladen wird, der durch die Ladevorrichtung zugeführt wird, in Reaktion darauf, dass der Reinigungsroboter von einem Benutzer zu einem Ort nahe der Ladevorrichtung (20) zum manuellen Aufladen bewegt wird, wenn festgestellt wird, dass der Reinigungsroboter (10) an dem Ort nahe der Ladevorrichtung (20) in der vorbestimmten Reichweite von der Ladevorrichtung (20) angeordnet ist, und festgestellt wird, dass die Ladeanschlüsse (21) der Ladevorrichtung und die Verbindungsanschlüsse (11) des Reinigungsroboters an dem Ort nahe der Ladevorrichtung (20) voneinander getrennt sind,
wobei die Steuereinheit (30) dazu ausgelegt ist, unter Verwendung eines Kurzstreckensignals, das von der Ladevorrichtung übertragen wird, festzustellen, ob der Reinigungsroboter (10) in der vorbestimmten Reichweite angeordnet ist, und festzustellen, ob der Reinigungsroboter (10) vor der Ladevorrichtung (20) angeordnet ist, wenn das Kurzstreckensignal erfasst wird.

7. Reinigungsrobotersystem nach Anspruch 6, wobei der Reinigungsroboter (10) ferner einen vorderen Sensor (16) aufweist, wobei die Steuereinheit (30) dazu ausgelegt ist, auf der Basis eines Signals vom vorderen Sensor (16) festzustellen, ob der Reinigungsroboter (10) vor der Ladevorrichtung (20) angeordnet ist.

8. Reinigungsrobotersystem nach Anspruch 7, wobei der vordere Sensor (16) einen Abstandssensor aufweist, der im Reinigungsroboter (10) angeordnet ist.

## Revendications

1. Procédé de chargement d'un robot nettoyeur déplacé par un utilisateur vers un emplacement proche d'un appareil de chargement (20) pour un chargement manuel, le procédé comprenant :
la détection (S11) d'un état connecté entre des bornes de chargement (21) de l'appareil de chargement (20) et des bornes de connexion (11) du robot nettoyeur (10) à l'emplacement proche de l'appareil de chargement (20) ;
la détermination (S13 ; S 14) si le robot nettoyeur (10) à l'emplacement proche de l'appareil de chargement (20) est positionné dans une plage prédéterminée à partir de l'appareil de chargement (20) lorsque les bornes de chargement (21) et les bornes de connexion (11) sont séparées les unes des autres ; et
le déplacement automatique et l'arrimage automatique du robot nettoyeur (10) à l'appareil de chargement (20) pour ainsi être chargé (S16) en électricité fournie par l'appareil de chargement, en réponse au déplacement du robot nettoyeur vers l'emplacement proche de l'appareil de chargement (20), lorsqu'il est déterminé que le robot nettoyeur (10) à l'emplacement proche de l'appareil de chargement (20) est positionné dans la plage prédéterminée à partir de l'appareil de chargement (20) et il est détecté que les bornes de chargement (21) de l'appareil de chargement et les bornes de connexion (11) du robot nettoyeur à l'emplacement proche de l'appareil de chargement (20) sont séparées les unes des autres,
dans lequel la détermination si le robot nettoyeur est positionné dans la plage prédéterminée comprend la détection d'un signal à courte distance transmis depuis l'appareil de chargement (20) et la détermination (S 14) si le robot nettoyeur (10) est positionné devant l'appareil de chargement (20) lorsque le signal à courte distance est détecté.

2. Procédé selon la revendication 1, dans lequel la détermination (S13, S 14) est effectuée après un laps de temps prédéterminé à la suite de la détection (S11) que les bornes de chargement (21) et les bornes de connexion (11) sont séparées les unes des autres.

3. Procédé selon la revendication 1, dans lequel la détermination (S14) si le robot nettoyeur (10) est positionné devant l'appareil de chargement (20) comprend la détermination si le robot nettoyeur (10) est positionné devant l'appareil de chargement (20) en utilisant un capteur frontal (16) disposé dans le robot nettoyeur (10).

4. Procédé selon la revendication 3, dans lequel le capteur frontal (16) comprend un capteur de distance disposé dans le robot nettoyeur (10).

5. Procédé selon la revendication 3, dans lequel le capteur frontal (16) comprend une caméra disposée dans le robot nettoyeur (10).

6. Système de robot nettoyeur comprenant :
un robot nettoyeur (10) comprenant :
- une batterie (13) ;
- une paire de bornes de connexion (11) pour charger la batterie (13) ; et
- une unité de commande (30) ; et
un appareil de chargement (20) comprenant des bornes de chargement (21) ;
**caractérisé en ce que**
l'unité de commande (30) est apte à déterminer si le robot nettoyeur (10) est positionné dans une plage prédéterminée à partir de l'appareil de chargement (20) et à déterminer si les bornes de chargement de l'appareil de chargement (20) et les bornes de connexion (11) du robot nettoyeur (10) sont séparées les unes des autres,
dans lequel l'unité de commande (30) est apte à commander au robot nettoyeur (10) de se déplacer automatiquement et de s'arrimer automatiquement à l'appareil de chargement (20) pour ainsi être chargé (S16) en électricité fournie par l'appareil de chargement en réponse au robot nettoyeur déplacé par un utilisateur à un emplacement proche de l'appareil de chargement (20) pour un chargement manuel lorsqu'il est déterminé que le robot nettoyeur (10) à l'emplacement proche de l'appareil de chargement (20) est positionné dans la plage prédéterminée à partir de l'appareil de chargement (20) et il est déterminé que les bornes de chargement (21) de l'appareil de chargement et les bornes de connexion (11) du robot nettoyeur à l'emplacement proche de l'appareil de chargement (20) sont séparées les unes des autres,
dans lequel l'unité de commande (30) est apte à déterminer si le robot nettoyeur (10) est positionné dans la plage prédéterminée en utilisant un signal à courte distance transmis depuis l'appareil de chargement et à déterminer si le robot nettoyeur (10) est positionné devant l'appareil de chargement (20) lorsque le signal à courte distance est détecté.

7. Robot nettoyeur selon la revendication 6, comprenant également un capteur frontal (16) et dans lequel l'unité de commande (30) est adaptée pour déterminer si le robot nettoyeur (10) est positionné en face de l'appareil de chargement (20) sur la base d'un signal provenant du capteur frontal (16).

8. Robot nettoyeur selon la revendication 7, **caractérisé en ce que** le capteur frontal (16) comprend un capteur à distance disposé dans le robot nettoyeur (10).
